# FASCICULE DE BREVET EUROPEEN

(11) **EP 2 581 609 B1**
(45) Date de publication et mention de la délivrance du brevet: **07.06.2017**
(21) Numéro de dépôt: 12187609.8
(22) Date de dépôt: 08.10.2012
(51) Int. Cl.: F15B 13/043, F15B 19/00

(54) **Procédé de détection de défaillance d'une servovalve et servovalve faisant application**
Verfahren zur Erkennung einer Störung eines Servoventils und Servoventil, bei dem dieses Verfahren zur Anwendung kommt
A method of detecting failure of a servo-valve, and a servo-valve applying the method

(30) Priorité: 10.10.2011 FR 1159118
(43) Date de publication de la demande: 17.04.2013
(73) Titulaire: Zodiac Hydraulics, 28200 Châteaudun (FR)
(72) Inventeur: Ozzello, Guylain, 41290 LA CHAPELLE ENCHERIE (FR)
(74) Mandataire: Parzy, Benjamin Alain

(56) Documents cités:
- EP-A2- 0 093 348
- EP-A2- 0 982 503
- US-A- 4 576 198

## Description

La présente invention concerne un procédé de détection de défaillance d'une servovalve de débit à deux étages dont l'organe mobile de distribution de puissance est relié au rotor du moteur couple de l'étage de pilotage par un retour mécanique. L'invention a également pour objet une servovalve.

### Etat de la technique

Une servovalve classique est constituée d'un étage de pilotage de type à jet oscillant ou dévié ou de type à buses avec palette pilotant un organe mobile de distribution de puissance de l'étage de puissance. L'étage de puissance a pour fonction de délivrer une pression ou un débit proportionnels à une instruction transmise à l'étage de pilotage.

Dans ces servovalves, la position relative de l'émetteur hydraulique (buse ou éjecteur) et du récepteur hydraulique (palette, déflecteur ou récepteur fixe) de l'étage de pilotage génère des différentiels de pression qui sont exploités pour déplacer finement l'organe mobile de distribution de puissance de l'étage de puissance de la servovalve. Généralement, la position de l'émetteur ou du récepteur hydraulique est pilotée par un moteur couple qui déplace l'un des éléments hydrauliques de l'étage de pilotage (la palette pour les servovalves à buses et palette, l'éjecteur pour les servovalves à éjecteur mobile et le déflecteur pour les servovalves à éjecteur fixe) en regard de l'autre. En réponse à une demande d'un utilisateur, un calculateur envoie une instruction sous forme d'un courant électrique au moteur couple. Cette instruction entraîne un mouvement angulaire du rotor du moteur couple par rapport au stator, qui, en modifiant la position relative de l'émetteur et du récepteur hydraulique, entraîne un différentiel de pression sur l'organe mobile de distribution de puissance de l'étage de puissance. Celui-ci se déplace alors d'une valeur sensiblement proportionnelle à l'instruction électrique reçue par le moteur couple. Le déplacement de l'organe mobile de distribution de puissance met alors en communication un ensemble de canaux forés et de lumières dont l'agencement permet de délivrer une pression ou un débit, en fonction du déplacement dudit organe de distribution de puissance. Lorsque l'effet souhaité (généralement le positionnement d'un élément mû par un vérin relié à l'étage de puissance d'une servovalve) est obtenu, le calculateur envoie l'instruction d'arrêt, la servovalve arrête alors la délivrance de pression ou de débit. Des boucles d'asservissement entre le mouvement du vérin et l'instruction de la servovalve sont généralement établies via le calculateur.

Ces servovalves comprennent usuellement une liaison mécanique entre le rotor du moteur couple et l'organe mobile de distribution de puissance, appelée par exemple « tige de rétroaction ». Elle est généralement implantée au milieu de l'élément mobile et est également solidaire de la palette ou l'éjecteur.

De telles servovalves sont largement utilisées dans l'aéronautique, notamment pour les commandes de vol ou l'orientation des roues.

La fonction de ces organes étant critique, il est important pour la sûreté des aéroplanes de pouvoir surveiller la conformité du fonctionnement des servovalves et ainsi alerter le calculateur de bord en cas de défaut avant même que le fonctionnement défectueux de la servovalve puisse causer un dysfonctionnement perceptible du matériel commandé. Le pilote ou le système peut alors déconnecter l'équipement identifié comme défectueux et activer un éventuel équipement redondant.

Classiquement, le calculateur de bord émet, suite à demande du pilote, une instruction vers le moteur couple dans le but de générer une pression ou un débit adaptés à la réalisation du mouvement souhaité d'un élément hydraulique. Ce calculateur reçoit également des informations lui permettant de vérifier que le mouvement souhaité a correctement lieu.

Les défauts pouvant affecter une servovalve impactent tous la position de l'organe mobile de distribution de puissance. On peut notamment citer les cas de défaillance suivants :
a) Tiroir en position fin de course créant un embarquement rapide de la servocommande : rupture de tige de rétroaction, extrusion de certains joints de fourrure, ...
b) Tiroir bloqué créant un embarquement plus ou moins brusque selon le débit sur lequel est bloqué le tiroir : copeau coincé entre la fourrure et le tiroir
c) Rupture d'alimentation hydraulique de l'étage de pilotage : fissure dans les pièces de structure, colmatage de l'alimentation hydraulique du premier étage.
d) Rupture d'alimentation électrique : rupture des 2 bobines, rupture des fils d'alimentation. La détection de ce type de panne est usuellement dévolue au dispositif de contrôle du calculateur.

L'embarquement d'une servocommande se définit comme un état défectueux du matériel commandé, tel un vérin, qui se positionne rapidement et brusquement dans un de ses états extrêmes. Par exemple, pour un vérin, l'embarquement de servocommande se traduit par un passage rapide de la tige du vérin jusqu'à l'état « tige complètement sortie » ou « tige complètement rentrée ». La servovalve de cette boucle de servocommande est également dans un état de défaillance, entre autres l'un des cas a) à d) ci-dessus, dans laquelle elle fournit un débit ou une pression de sortie différente de celle commandée du fait d'une position incorrecte du tiroir de distribution de l'organe de puissance ».

La mesure d'un écart de position de l'organe mobile de distribution de puissance entre la position commandée par le calculateur et sa position effective traduit un dysfonctionnement de la servovalve.

Actuellement, la détermination de la position de l'organe mobile de distribution de puissance est réalisée par un capteur de déplacement linéaire passif de type LVDT. Ce type de capteur nécessite un module électronique, appelé conditionneur, pour pouvoir fonctionner. Ces capteurs présentent l'avantage d'être de constitution simple, de pouvoir fonctionner dans des environnements extrêmement contraignants et d'avoir une bonne résolution. Cependant, l'intégration de ce type de capteur à la servovalve pose les problèmes suivants :
- l'encombrement de la servovalve se voit augmenté de 10 à 50% selon les modèles ;
- la masse de la servovalve se voit augmentée de 5 à 20%. Cet effet est particulièrement dommageable pour les applications aéronautiques où l'allégement des équipements est la règle ;
- le coût d'une servovalve équipée est de 5 à 20% supérieur à celui d'une servovalve non équipée ;
- le temps moyen entre pannes (Mean Time Between Failure) est augmenté de 10 à 20% ;
- la nécessité d'un conditionneur traitant le signal du capteur pénalise supplémentairement les aspects d'encombrement, de masse, de coût et de fiabilité.

L'état de la technique est notamment représenté par le document US 4576198.

### Objet de l'invention

Un but de l'invention est de proposer un procédé simple de détection de défaillance d'une servovalve à deux étages à rétroaction mécanique.

### Exposé de l'invention

A cet effet, on propose, un procédé de détection de défaillance d'une servovalve comportant un étage de puissance avec un organe mobile de distribution de puissance et un étage de pilotage comportant un moteur couple, ce moteur couple comprenant un stator et un rotor dont la position angulaire est commandée afin de déplacer de façon contrôlée l'organe mobile de distribution de puissance, ledit organe mobile de distribution de puissance étant relié au rotor du moteur couple par un retour mécanique, ledit procédé comprenant selon l'invention la détection d'une venue en butée du rotor du moteur couple et la génération d'un signal de dysfonctionnement en réponse à cette détection.

Le procédé est basé sur la détection d'un état discret : venue en butée du rotor. Ce type d'état est détectable par des moyens simples tels que des contacts secs ou des capteurs sans contact (de type magnétique par exemple). Le choix du moyen de détection dépendra de la nature du circuit de détection que l'on souhaite mettre en oeuvre notamment en regard de sa capacité à être perturbé par son environnement ou des facilités de traitement par le calculateur du signal généré. La simplicité de ces moyens peut avoir également pour effet d'améliorer la fiabilité, l'économie et la masse du dispositif. Il est possible d'équiper une servovalve existante, pour un surcoût et un surpoids faible, d'un dispositif particulièrement robuste et fiable pouvant générer un signal de dysfonctionnement clair et rapide.

Les inventeurs se sont en effet aperçus qu'un défaut de fonctionnement de la servovalve entraînait le plus souvent une venue en butée du rotor du moteur couple.

Lors d'une défaillance de la servovalve, le calculateur de bord émet une instruction corrective (augmentation/réduction/arrêt de l'alimentation hydraulique) vers la servovalve. Celle-ci se traduit par l'application d'un couple électromagnétique sur le rotor aussi longtemps que le mouvement souhaité de l'élément hydraulique n'a pas été exécutée. Ainsi, en cas de défaillance de la servovalve, un couple constant étant appliqué sur le rotor, celui-ci vient sur l'une de ses butées, la souplesse des éléments liés au rotor autorisant ce mouvement.

L'invention comprend également une servovalve pourvue de moyens pour mettre en oeuvre un tel procédé.

D'autres caractéristiques et avantages de l'invention ressortiront à la lecture de la description qui suit de modes de réalisation particuliers non limitatifs de l'invention.

### Brève description des dessins

Il sera fait référence aux dessins annexés, parmi lesquels :
- la figure 1 est une vue schématique d'une servo-valve dans une configuration sans dysfonctionnement
- la figure 2 est une vue schématique d'une servo-valve dans une configuration avec dysfonctionnement

### Description détaillée d'au moins un mode de réalisation de l'invention

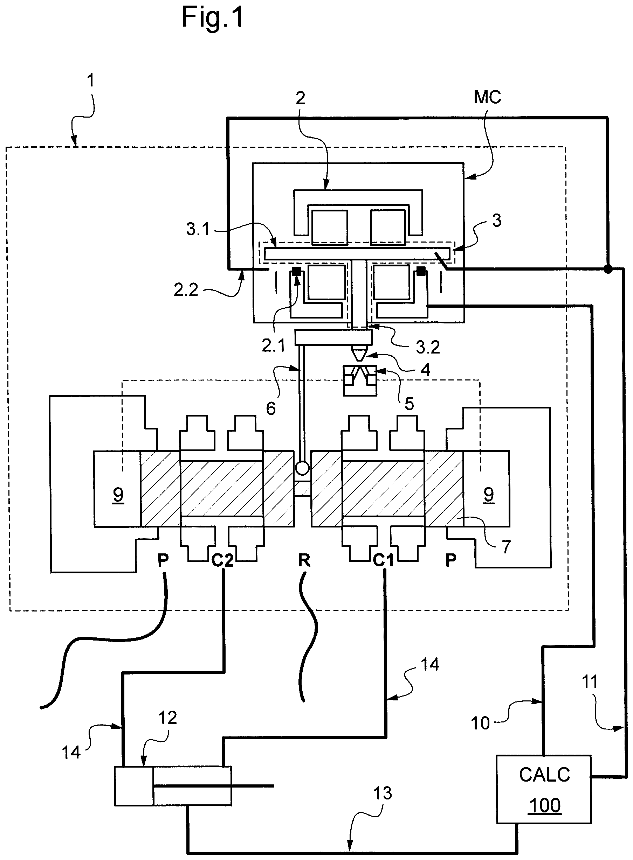

La figure 1 est un schéma fonctionnel d'une servo-valve généralement désignée 1. Celle-ci peut être intégrée au circuit de commande d'un équipement hydraulique comme un vérin de commande de volet d'aile d'avion 12. La servovalve comprend un moteur couple désigné MC

La servovalve 1 comprend un étage de pilotage et un étage de puissance. L'étage de pilotage comprend un moteur couple MC dont le mouvement est commandé par un calculateur 100 qui transmet ses instructions au moteur couple MC via un canal d'instructions 10. L'étage de puissance est relié à une alimentation hydraulique P, un port de retour R et deux sorties C1 et C2 .Les sorties C1 et C2 alimentent les 2 chambres d'un vérin double effet 12 par les conduites 14. Le calculateur 100 reçoit des informations en provenance du moteur couple par un canal de surveillance de fonctionnement 11 ainsi que des informations sur la position du vérin par le canal d'information 13.

Le moteur couple MC comprend un stator 2 et un rotor 3. Le stator 2 est une cage entourant le rotor 3 et disposant de butées magnétiques 2.1 destinées à accueillir le rotor dans ses positions extrêmes. Le rotor 3 comprend deux éléments principaux:
- une palette magnétique 3.1 sollicitée par le champ magnétique développé par le stator et mobile par rapport au corps de la servovalve 1
- une colonne 3.2 s'étendant en saillie du stator et pénétrant à l'intérieur du corps de la servovalve.

Le rotor 3 est solidaire d'un éjecteur à fluide 4 qui fait face à un receveur fixe 5. L'éjecteur 4 oriente sélectivement un fluide hydraulique en fonction du mouvement du rotor 3. Un retour mécanique sous la forme d'une tige de rétroaction 6 relie mécaniquement l'organe mobile de distribution de puissance -le tiroir 7- à la colonne 3.2.

Des détecteurs de venue en butée, ici sous la forme d'interrupteurs NO 2.2, sont disposés à proximité des butées magnétiques 2.1 et agencés de manière à être actionnés par l'extrémité de la palette magnétique 3.1 lorsque le rotor 3 vient en butée. Ils communiquent avec le calculateur 100 par le canal surveillance de fonctionnement 11. Le receveur fixe 5 dispose de 2 canaux 8, schématiquement représentés, qui débouchent dans les chambres 9 situées de part et d'autre du tiroir. Un mouvement du rotor 3 déplace l'éjecteur 4 relativement au déflecteur 5. Deux flux différents sont alors dirigés via les canaux 8 dans les chambres 9 situées de part et d'autre du tiroir 7. Ces flux créent un différentiel de pression dans les chambres 9 qui provoque la translation du tiroir 7 qui délivre au vérin 12, via les conduites 14, un débit de sortie de servovalve 1 sensiblement proportionnel au courant de commande appliqué à l'entrée du moteur couple MC.

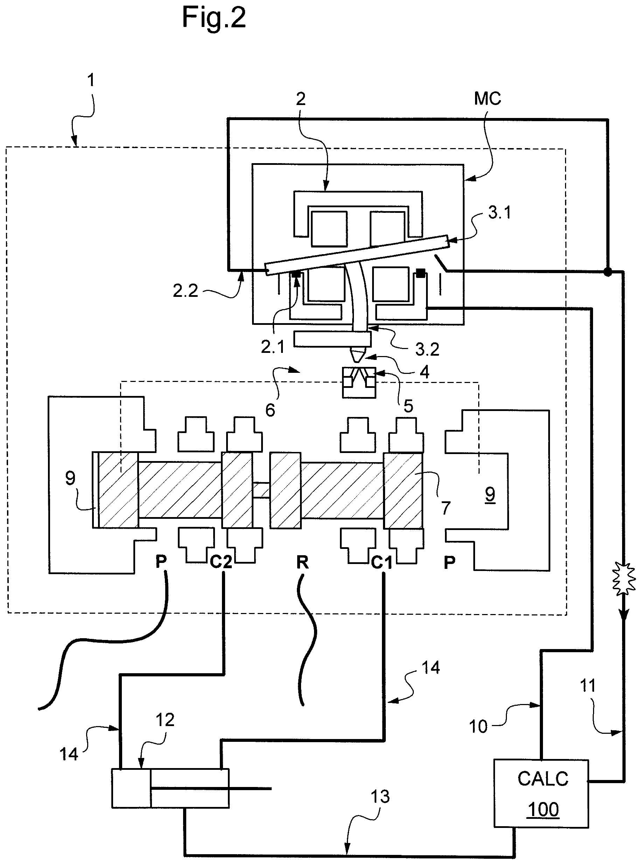

La figure 2 est une représentation de la servovalve 1 dans le cas d'une anomalie, ici la rupture de la tige de rétroaction 6. Dans cette situation, le tiroir 7 va se placer immédiatement en butée au fond de l'une ou l'autre des chambres 9, provoquant un embarquement de la servocommande. Un débit important est alors délivré par la servovalve 1 vers le vérin 12 via les conduites 14. Le calculateur 0, informé du mouvement du vérin 12 par le canal d'information 13 envoie une instruction corrective à la servovalve par le canal d'instructions 10. Celle-ci prend la forme d'un courant appliqué au moteur couple MC et destiné à provoquer le déplacement de la palette dans une direction permettant le retour au mouvement souhaité du vérin 12. Cette instruction corrective est maintenue tant que le mouvement du vérin 12 n'a pas été conformément réalisé. Soumis par le stator 2 à un couple magnétique constant, la palette magnétique 3.1 du rotor 3 vient sur une des butées magnétiques 2.1 et ferme l'un des interrupteurs 2.2. En réponse à cette venue en butée, la fermeture de ce circuit génère un signal de dysfonctionnement sur le canal de surveillance de fonctionnement 11. Il peut être utile d'ajouter une temporisation ou un filtre à la détection de la fermeture d'un des interrupteurs 2.2 puisque de forts appels en débit peuvent générer de brefs mises en butée du rotor 3. Cependant la dynamique élevée du premier étage fait que la rapidité de détection par le dispositif de l'invention est du même ordre que celle d'un système comprenant un capteur de type LVDT sur le tiroir de la servovalve.

Le signal de dysfonctionnement peut déclencher une alerte au pilote ou être directement traité par le calculateur qui peut décider d'appliquer une procédure de sécurité consistant à désactiver la servovalve défaillante et activer un éventuel matériel redondant.

Bien entendu, l'invention n'est pas limitée aux modes de réalisation décrits mais englobe toute variante entrant dans le champ de l'invention telle que définie par les revendications.

En particulier,
- la servovalve peut être une servovalve délivrant une consigne de pression ;
- la détection de la venue en butée du rotor 3 peut être réalisée par d'autres types de capteur, comme par exemple un capteur inductif, un interrupteur NO ou NF, un capteur piezométrique, un capteur ohmique ou encore par mesure de la résistance entre le stator et le rotor ;
- la détection de la venue en butée peut se faire à tout endroit du système, par exemple par la mesure de la torsion de la colonne 3.2 ;

- les capteurs de venue en butée 2.2 peuvent être portés par le rotor lui-même, permettant la réalisation d'un élément compact ;
- les capteurs de venue en butée 2.2 peuvent être portés par le stator 2 lui-même, permettant la réalisation d'un élément compact, notamment en se substituant aux butées magnétiques 2.1 ;
- les capteurs de venue en butée 2.2 peuvent être positionnés à l'intérieur ou à l'extérieur de la cage du stator 2 ;
- le moteur couple MC peut solliciter le rotor 3 en torsion ;
- les canaux d'instruction 10 et de surveillance de fonctionnement 11 peuvent être confondus (multiplexage) ;
- un circuit branché en parallèle des détecteurs de venue en butée et se fermant en cas d'absence de courant d'alimentation des bobines peut être adjoint au dispositif ;
- bien que l'invention se rapporte ici à un moteur couple comportant une partie fixe sous la forme d'un stator et une partie mobile sous la forme d'un rotor, l'invention s'applique également à un moteur linéaire dont une partie fixe entraîne en translation une partie mobile.

## Revendications

1. Procédé de détection de défaillance d'une servo-valve (1) comportant un étage de puissance avec un organe mobile de distribution de puissance (7) et un étage de pilotage qui comporte un moteur couple (MC) comprenant une partie fixe (2) et une partie mobile (3) dont la position est commandée afin de déplacer de façon contrôlée l'organe mobile de distribution de puissance (7), ledit organe mobile de distribution de puissance (7) étant relié à la partie mobile (3) du moteur (MC) par un organe de rétroaction (6), **caractérisé en ce que** l'on détecte d'une venue en butée de la partie mobile (3) du moteur (MC) et l'on génère un signal de dysfonctionnement en réponse à cette détection

2. Procédé selon la revendication 1, la détection de la venue en butée du rotor (3) est réalisée par un capteur (2.2) opérationnellement relié à la partie mobile (3) du moteur (MC) de sorte à changer d'état lorsque la partie mobile (3) du moteur (MC) vient en butée, le changement d'état générant un signal de dysfonctionnement

3. Servovalve (1) comportant un étage de puissance avec un organe mobile de distribution de puissance (7) et un étage de pilotage qui comporte un moteur couple (MC) comprenant une partie fixe (2) et une partie mobile (3) dont la position angulaire est commandée afin de déplacer de façon contrôlée l'organe mobile de distribution de puissance (7), ledit organe mobile de distribution de puissance (7) étant relié à la partie mobile (3) du moteur (MC) par un organe de rétroaction (6), **caractérisé en ce que** la servovalve est équipée de moyens (2.2) de détection d'une venue en butée de la partie mobile (3) du moteur (MC).

4. Servovalve selon la revendication 3, comprenant un capteur (2.2) opérationnellement relié à la partie mobile (3) du moteur (MC) de sorte à changer d'état lorsque la partie mobile (3) du moteur (MC) vient en butée, le changement d'état générant un signal de dysfonctionnement.

## Patentansprüche

1. Verfahren zum Erkennen einer Störung eines Servoventils (1), das eine Leistungsstufe mit einem beweglichen Leistungsverteilungsorgan (7) und eine Steuerstufe umfasst, die einen Drehmomentmotor (MC) enthält, der einen ortsfesten Teil (2) und einen beweglichen Teil (3) umfasst, dessen Position gesteuert wird, um das bewegliche Leistungsverteilungsorgan (7) auf gesteuerte Weise zu verschieben, wobei das genannte bewegliche Leistungsverteilungsorgan (7) über ein Rückführungsorgan (6) mit dem beweglichen Teil (3) des Motors (MC) verbunden ist, **dadurch gekennzeichnet, dass** man ein Anschlagen des beweglichen Teils (3) des Motors (MC) erfasst und man in Antwort auf dieses Erfassen ein Funktionsstörungssignal erzeugt.

2. Verfahren nach Anspruch 1, bei dem das Erfassen des Anschlagens des Rotors (3) durch einen Sensor (2.2) erfolgt, der funktionsfähig mit dem beweglichen Teil (3) des Motors (MC) verbunden ist, dass er den Zustand ändert, wenn der bewegliche Teil (3) des Motors (MC) anschlägt, wobei die Zustandsänderung ein Funktionsstörungssignal erzeugt.

3. Servoventil (1), umfassend eine Leistungsstufe mit einem beweglichen Leistungsverteilungsorgan (7) und eine Steuerstufe, die einen Drehmomentmotor (MC) enthält, der einen ortsfesten Teil (2) und einen beweglichen Teil (3) umfasst, dessen Winkelposition gesteuert wird, um das bewegliche Leistungsverteilungsorgan (7) auf gesteuerte Weise zu verschieben, wobei das genannte bewegliche Leistungsverteilungsorgan (7) über ein Rückführungsorgan (6) mit dem beweglichen Teil (3) des Motors (MC) verbunden ist, **dadurch gekennzeichnet, dass** das Servoventil mit Mitteln (2.2) zum Erfassen eines Anschlagens des beweglichen Teils (3) des Motors (MC) ausgestattet ist.

4. Servoventil nach Anspruch 3, umfassend einen Sensor (2.2), der funktionsfähig mit dem beweglichen Teil (3) des Motors (MC) verbunden ist, sodass er den Zustand ändert, wenn der bewegliche Teil (3) des Motors (MC) anschlägt, wobei die Zustandsänderung ein Funktionsstörungssignal erzeugt.

## Claims

1. A method of detecting a failure of a servo-valve (1) having a power stage with a movable member (7) for distributing power and a pilot stage that includes a motor (MC) having a stationary portion (2) and a movable portion (3) that occupies a position that is controlled in order to move the movable member (7) for distributing power in controlled manner, said movable member (7) for distributing power being connected to the movable portion (3) of the motor (MC) by a feedback member (6), the method being **characterized by** detecting the movable portion (3) of the motor (MC) engaging a stop, and by generating a malfunction signal in response to such detection.

2. A method according to claim 1, wherein the rotor (3) engaging a stop is detected by a sensor (2.2) operationally connected to the movable portion (3) of the motor (MC) in such a manner as to change state when the movable portion (3) of the motor (MC) engages a stop, with the change in state generating a malfunction signal.

3. A servo-valve (1) comprising a power stage with a movable member (7) for distributing power and a pilot stage that includes a motor (MC) having a stationary portion (2) and a movable portion (3) that occupies a position that is controlled in order to move the movable member (7) for distributing power in controlled manner, said movable member (7) for distributing power being connected to the movable portion (3) of the motor (MC) by a feedback member (6), the servo-valve being **characterized in that** it is fitted with means (2.2) for detecting the movable portion (3) of the motor (MC) engaging a stop.

4. A servo-valve according to claim 3, including a sensor (2.2) operationally connected to the movable portion (3) of the motor (MC) in such a manner as to change state when the movable portion (3) of the motor (MC) engages a stop, the change of state generating a malfunction signal.
